# EUROPEAN PATENT APPLICATION

(11) **EP 4 156 216 A1**
(43) Date of publication of application: **29.03.2023**
(21) Application number: 21824774.0
(22) Date of filing: 15.06.2021
(51) Int. Cl.: H01G 11/74, H01M 50/543

(54) **ELECTRICAL STORAGE ELEMENT**

(30) Priority: 16.06.2020 JP 2020103840
(71) Applicant: GS Yuasa International Ltd., Kisshoin, Minami-ku, Kyoto-shi, Kyoto 601-8520 (JP); TOYOTA JIDOSHA KABUSHIKI KAISHA, Toyota-shi Aichi 471-8571 (JP)
(72) Inventor: NAKAMURA, Jun, Kyoto-shi, Kyoto 601-8520 (JP); KAWAI, Akio, Kyoto-shi, Kyoto 601-8520 (JP); TOGASHI, Hideyo, Kyoto-shi, Kyoto 601-8520 (JP); NAKATANI, Mitsuhiro, Kyoto-shi, Kyoto 601-8520 (JP); TAKADA, Toshihiro, Toyota-shi, Aichi 471-8571 (JP); INUKAI, Hiroshi, Toyota-shi, Aichi 471-8571 (JP); ONIZUKA, Hiroshi, Toyota-shi, Aichi 471-8571 (JP); HAMAGUCHI, Naoya, Toyota-shi, Aichi 471-8571 (JP)
(74) Representative: Isarpatent
(86) International application number: PCT/JP2021/022668
(87) International publication number: WO 2021/256462

(57) **Abstract**

This embodiment includes an electrode assembly; a case for housing the electrode assembly; and an external terminal made of a metal and disposed on the case, in which the external terminal includes: a flange extending along an outer surface of the case; and a shaft extending from the flange to pass through the case and be conductive with the electrode assembly, the flange is made of a clad material having a plurality of metal layers layered in a passing direction of the shaft, each adjacent ones of the plurality of metal layers are made of different metals in kind, and one of the plurality of metal layers of the flange at one end in the passing direction is made of the same metal in kind as the metal of the shaft, and is welded to the shaft.

## Description

### CROSS-REFERENCE TO RELATED APPLICATION

The present application claims priority to Japanese Patent Application No. 2020-103840, the disclosure of which is incorporated herein by reference in its entirety.

### FIELD

The present invention relates to an electric storage device including an external terminal.

### BACKGROUND

Conventionally known is a lithium-ion secondary battery cell including an external terminal formed of a plurality of members (see Patent Literature 1). In this lithium-ion secondary battery cell, as shown in Fig. 12, an external terminal 100 includes a shaft 101 and a flange 102 extending from the shaft 101 and configured to allow other members such as a bus bar to be welded thereto, and the shaft 101 and the flange 102 are formed as separate members. The shaft 101 and the flange 102 are connected to each other by swaging.

In such an external terminal 100, there are some cases where the shaft 101 and the flange 102 are welded together to ensure a stronger connection between the shaft 101 and the flange 102. In this case, if the flange 102 is made of a different metal in kind from the metal of the shaft 101 due to, for example, the welding of the other members to the flange 102, the welding between the shaft 101 and the flange 102 made of different metals in kind hardly secures the welding strength therebetween.

### CITATION LIST

### Patent Literature

Patent Literature 1: JP 2009-259524 A

### SUMMARY

### Technical Problem

It is therefore an object of this embodiment to provide an electric storage device securing welding strength between a shaft and a flange of an external terminal even if the shaft and the flange respectively have different metals in kind.

### Solution to Problem

An electric storage device of this embodiment includes: an electrode assembly; a case for housing the electrode assembly; and an external terminal made of a metal and disposed on the case, in which the external terminal includes: a flange extending along an outer surface of the case; and a shaft extending from the flange to pass through the case and be conductive with the electrode assembly, the flange is made of a clad material having a plurality of metal layers layered in a passing direction of the shaft, each adjacent ones of the plurality of metal layers are made of different metals in kind, and one of the plurality of metal layers of the flange at one end in the passing direction is made of the same metal in kind as the metal of the shaft, and is welded to the shaft.

In the electric storage device, the configuration can be such that the flange and the shaft are connected to each other with the shaft being swaged, and a weld zone between the metal layer at the one end and the shaft is set to have a such a size as to cause no change in resistance of the electric storage device before and after the swaged portion of the shaft is damaged if such damage occurs.

In the electric storage device, the configuration can be such that the flange and the shaft are connected to each other with the shaft being swaged, a contact area between the flange and the swaged portion of the shaft is 46 mm² or more and 75 mm² or less, the flange has a dimension in the passing direction that is 0.9 mm or more and 1.1 mm or less, and the one of the plurality of metal layers welded to the shaft has a dimension in the passing direction that is 0.4 mm or more and 0.6 mm or less.

### BRIEF DESCRIPTION OF DRAWINGS

Fig. 1 is a perspective view of an electric storage device according to this embodiment.
Fig. 2 is an exploded perspective view of the electric storage device.
Fig. 3 is a view for explaining the configuration of an electrode assembly included in the electric storage device.
Fig. 4 is an enlarged cross-sectional view of a positive electrode terminal and a portion therearound of the electric storage device.
Fig. 5 is an enlarged view of a portion shown by V in Fig.1.
Fig. 6 is a cross-sectional view taken along line VI-VI in Fig. 6.
Fig. 7 is a cross-sectional view for explaining the configuration of a negative electrode flange.
Fig. 8 is a cross-sectional view showing the configuration of a negative electrode shaft in a state of not being swaged, and the configuration of a portion around the negative electrode shaft.
Fig. 9 is a perspective view of a negative electrode external terminal with the negative electrode shaft not being swaged, as viewed from a side of a third diameter expansion part corresponding portion.
Fig. 10 is an enlarged cross-sectional view for explaining the configuration of a negative electrode terminal according to another embodiment.
Fig. 11 is a schematic view of an electric storage apparatus including the electric storage device.

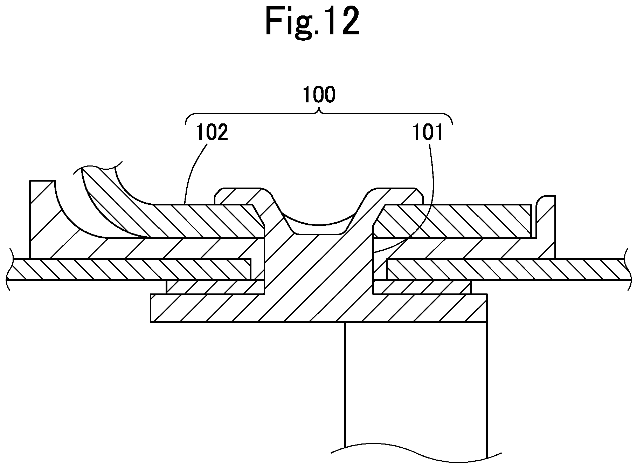

Fig. 12 is an enlarged cross-sectional view for explaining the configuration of a conventional external terminal.

### DESCRIPTION OF EMBODIMENTS

An electric storage device of this embodiment includes: an electrode assembly; a case for housing the electrode assembly; and an external terminal made of a metal and disposed on the case, in which the external terminal includes: a flange extending along an outer surface of the case; and a shaft extending from the flange to pass through the case and be conductive with the electrode assembly, the flange is made of a clad material having a plurality of metal layers layered in a passing direction of the shaft, each adjacent ones of the plurality of metal layers are made of different metals in kind, and one of the plurality of metal layers of the flange at one end in the passing direction is made of the same metal in kind as the metal of the shaft, and is welded to the shaft.

Even when the flange has a different metal in kind from the metal of the shaft, sufficient welding strength between the shaft and the flange is secured by the above described configuration that the flange is made of the clad material to allow the same metal in kind as the metal of the shaft to be disposed on the portion (metal layer) of the flange welded to the shaft.

In the electric storage device, the configuration can be such that the flange and the shaft are connected to each other with the shaft being swaged, and a weld zone between the one of the plurality of metal layers at the one end and the shaft is set to have a such a size as to cause no change in resistance of the electric storage device before and after the swaged portion of the shaft is damaged if such damage occurs.

Such a configuration hardly causes the electric storage device when in use to have an increased electric resistance value (that is, the electric storage device can secure its reliability in electric conduction).

In the electric storage device, the configuration can be such that the flange and the shaft are connected to each other with the shaft being swaged, a contact area between the flange and the swaged portion of the shaft is 46 mm² or more and 75 mm² or less, the flange has a dimension in the passing direction that is 0.9 mm or more and 1.1 mm or less, and the one of the plurality of metal layers welded to the shaft has a dimension in the passing direction that is 0.4 mm or more and 0.6 mm or less.

Such a configuration can sufficiently secure connecting strength and conduction performance between the flange and the shaft through swaging and welding.

As described above, according to this embodiment, provided can be the electric storage device securing welding strength between the shaft and the flange of the external terminal even when the flange has a different metal in kind from the metal of the shaft.

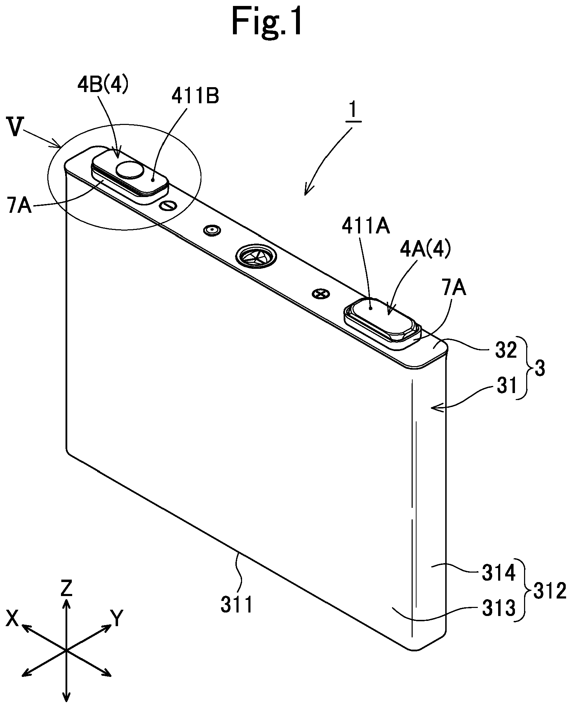

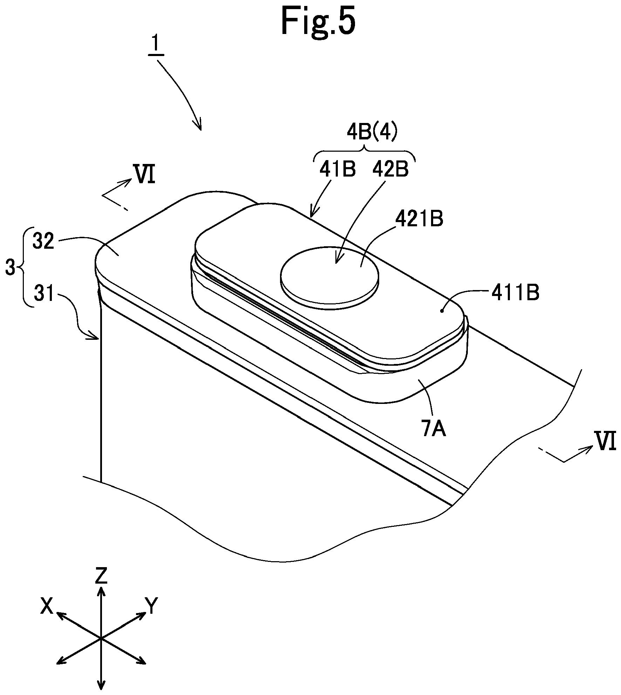

A description will be hereinafter given on one embodiment of the present invention with reference to Fig. 1 to Fig. 9. The names of parts and members (components) of this embodiment are applicable to those in this embodiment, and may differ from the names of parts and members (components) in the background art.

An electric storage device of this embodiment is a nonaqueous electrolyte secondary cell. More specifically, the electric storage device is a lithium-ion secondary battery cell that utilizes the movement of electrons caused by the movement of lithium ions. The electric storage device of this type supplies electric energy. A single electric storage device or a plurality of electric storage devices are used. Specifically, a single electric storage device is used when required power and required voltage are small. On the other hand, the electric storage device is used in combination with another electric storage device for an electric storage apparatus when at least one of required power and required voltage is large. In the electric storage apparatus, the electric storage device used for the electric storage apparatus supplies electric energy.

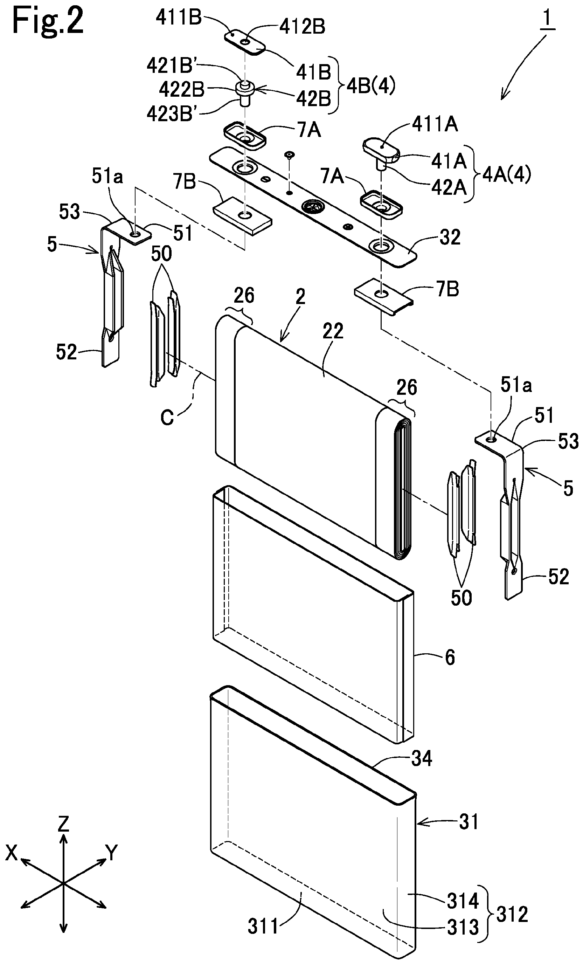

As shown in Fig. 1 and Fig. 2, the electric storage device includes: an electrode assembly 2; a case 3 for housing the electrode assembly 2; and external terminals 4 made of a metal and disposed on the case 3. The electric storage device 1 further includes, for example, current collectors 5 for making the electrode assembly 2 and the external terminals 4 conductive with each other, and an insulating member 6 disposed between the electrode assembly 2 and the case 3. The external terminal 4 shown in Fig. 2 (specifically, a negative electrode shaft 42B of a negative electrode terminal 4B) has a shape before being swaged.

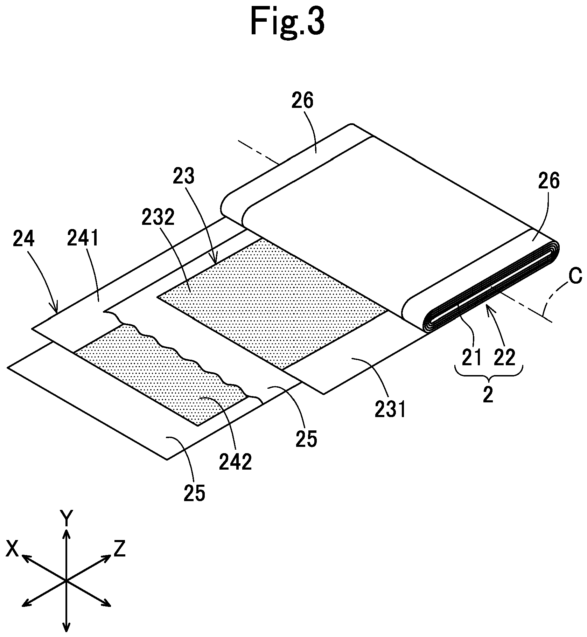

As shown also in Fig. 3, the electrode assembly 2 includes wound electrodes (a positive electrode 23 and a negative electrode 24). Specifically, the electrode assembly 2 includes a winding core 21, and a layered body 22 formed of the electrodes wound around the winding core 21. In this layered body 22, the positive electrode 23 and the negative electrode 24 are layered in a state of being insulated from each other. The electric storage device 1 charges and discharges electricity when lithium ions move between the positive electrode 23 and the negative electrode 24 in the electrode assembly 2.

The positive electrode 23 has a metal foil 231 having a strip shape, and a positive electrode active material layer 232 in abutment with the metal foil 231. The positive electrode active material layer 232 is brought into abutment with the metal foil 231 while one end edge portion (non-covered portion) in a width direction of the metal foil 231 is exposed. The metal foil 231 of this embodiment is, for example, an aluminum foil.

The negative electrode 24 has a metal foil 241 having a strip shape, and a negative electrode active material layer 242 in abutment with the metal foil 241. The negative electrode active material layer 242 is brought into abutment with the metal foil 241 while the other end edge portion (non-covered portion) in the width direction of the metal foil 241, i.e., the portion on the other side of the non-covered portion of the metal foil 231 of the positive electrode 23, is exposed. The metal foil 241 of this embodiment is, for example, a copper foil.

In the electrode assembly 2 of this embodiment, the positive electrode 23 and the negative electrode 24 are wound in a state of being insulated by a separator 25. That is, in the layered body 22 of this embodiment, the positive electrode 23, the negative electrode 24, and the separator 25 are layered.

The separator 25 is a member having insulating properties, and is disposed between the positive electrode 23 and the negative electrode 24. This configuration allows the positive electrode 23 and the negative electrode 24 to be insulated from each other in the electrode assembly 2 (specifically, the layered body 22). Further, the separator 25 holds an electrolytic solution in the case 3. This configuration enables lithium ions to move between the positive electrode 23 and the negative electrode 24 layered alternately with the separator 25 therebetween, at the time of charging and discharging of the electric storage device 1.

This separator 25 has a strip shape, and is formed of a porous film of, for example, polyethylene, polypropylene, cellulose, or polyamide. The separator 25 of this embodiment has a base material formed of a porous film and an inorganic layer disposed on the base material. This inorganic layer includes inorganic particles such as SiO₂ particles, Al₂O₃ particles, or boehmite (alumina hydrate). The base material is made of, for example, polyethylene.

The separator 25 has a larger dimension in the width direction than the width of the negative electrode active material layer 242. The separator 25 is disposed between the positive electrode 23 and the negative electrode 24 in abutment with each other while being displaced from each other in the width direction so that the positive electrode active material layer 232 and the negative electrode active material layer 242 overlap each other in the thickness direction (layering direction). At that time, the non-covered portion of the positive electrode 23 and the non-covered portion of the negative electrode 24 are not in abutment. That is, the non-covered portion of the positive electrode 23 projects in the width direction (i.e., a direction orthogonal to the layering direction) from the area in which the positive electrode 23 and the negative electrode 24 overlap each other, and the non-covered portion of the negative electrode 24 projects in the width direction (i.e., the direction opposite to the direction in which the non-covered portion of the positive electrode 23 projects) from the area where the positive electrode 23 and the negative electrode 24 overlap each other. The positive electrode 23, the negative electrode 24, and the separator 25 are wound around the winding core 21 so as to be layered in such a state (so as to be positioned relative to each other), to thereby form the electrode assembly 2. In the electrode assembly 2 of this embodiment, a non-covered layered part 26 is formed with a portion of the electrode assembly 2 in which only the non-covered part of the positive electrode 23 or the non-covered part of the negative electrode 24 is layered.

The non-covered layered part 26 is provided at each electrode of the electrode assembly 2. That is, the non-covered layered part 26 in which only the non-covered portion of the positive electrode 23 is layered forms the non-covered layered part of the positive electrode in the electrode assembly 2, and the non-covered layered part 26 in which only the non-covered part of the negative electrode 24 is layered forms the non-covered part of the negative electrode in the electrode assembly 2.

The case 3 houses an electrolytic solution together with the electrode assembly 2. Specifically, the case 3 includes a case body 31 having an opening, and a cover plate 32 for closing the opening of the case body 31. This case 3 is made of a metal having resistance to the electrolytic solution. The case 3 of this embodiment is made of, for example, aluminum or an aluminum-based metal such as an aluminum alloy.

The electrolytic solution is a nonaqueous solution-based electrolytic solution. The electrolytic solution is obtained by dissolving an electrolyte salt in an organic solvent. Examples of the organic solvent include cyclic carbonate esters such as propylene carbonate and ethylene carbonate; and chain carbonates such as dimethyl carbonate, diethyl carbonate, and ethyl methyl carbonate. Examples of the electrolyte salt includes LiClO₄, LiBF₄, and LiPF₆. The electrolyte solution of this embodiment is obtained by dissolving 1 mol/L of LiPF₆ in a mixed solvent prepared with ethylene carbonate, dimethyl carbonate, and ethyl methyl carbonate at a ratio of ethylene carbonate : dimethyl carbonate : ethyl methyl carbonate = 3:2:5.

The case body 31 includes a closing part 311 having a plate shape, and a body part (peripheral wall) 312 having a tubular shape and connected to a peripheral edge of the closing part 311.

The closing part 311 is located at a lower end of the case body 311 when the case body 31 is disposed to have its opening directed upward (that is, serves as a bottom wall of the case body 31 when the opening is directed upward). The closing part 311 has a rectangular shape as viewed from a normal direction of the closing part 311. Hereinafter, a direction along a long side of the closing part 311 is referred to as an X-axis of the orthogonal coordinate system, a direction along a short side of the closing part 311 is referred to as a Y-axis of the orthogonal coordinate system, and the normal direction of the closing part 311 is referred to as a Z-axis of the orthogonal coordinate system.

The body part 312 has an angular tubular shape, more specifically, a flat angular tubular shape. The body part 312 has a pair of long walls 313 respectively extending from the long sides in the peripheral edge of the closing part 311, and a pair of short walls 314 respectively extending from the short sides in the peripheral edge of the closing part 311. That is, the pair of long walls 313 face each other with a clearance in the Y-axis direction therebetween (specifically, a clearance corresponding to a short side in the peripheral edge of the closing part 311), and the pair of short walls 314 face each other with a clearance in the X-axis direction therebetween (specifically, a clearance corresponding to a long side in the peripheral edge of the closing part 311). Each of the pair of short walls 314 has their ends connected to the corresponding ends (specifically, the ends facing each other in the Y-axis direction) of the pair of long walls 313 to thereby form the body 312 having an angular tubular shape.

As described above, the case body 31 has an angular tubular shape with one end in an opening direction (Z-axis direction) closed (that is, has a bottomed angular tubular shape). The case body 31 houses the electrode assembly 2 with its winding center axis C directed along the X-axis direction.

The cover plate 32 is a plate-shaped member for closing the opening of the case body 31. The cover plate 32 of this embodiment is a plate member having a rectangular shape elongated in the X-axis direction as viewed from the Z-axis direction. The cover plate 32 has its peripheral edge placed on an opening peripheral edge 34 of the case body 31 so as to close the opening of the case body 31. A boundary between the cover plate 32 and the case body 31 is welded together with the cover plate 32 placed on the opening peripheral edge 34 to thereby form the case 3.

Each of the external terminals 4 in the electric storage device 1 is configured to be electrically connected to, for example, an external terminal of another electric storage device, an external device, or the like. The external terminal 4 is formed of a member having conductivity. The electric storage device 1 of this embodiment includes two types of external terminals 4, namely a positive electrode terminal 4A and a negative electrode terminal 4B. These two external terminals 4 are disposed on the case 3 at positions away from each other in the X-axis direction, more specifically, at end positions in the X-axis direction of the case 3, with their portions 42A and 42B passing through the case 3.

In the electric storage device 1 of this embodiment, insulating members 7A and 7B are disposed between the external terminals 4 and the case 3, and between the case 3 and the current collectors 5, respectively. The insulating member 7A provides insulation between each of the external terminals 4 and the case 3 (cover plate 32 in the example of this embodiment), and provides sealing between the case 3 and each of the portions 42A and 42B of the external terminals 4 passing through the case 3. Further, the insulating member 7B provides insulation between the case 3 (cover plate 32 in the example of this embodiment) and each of the current collectors 5.

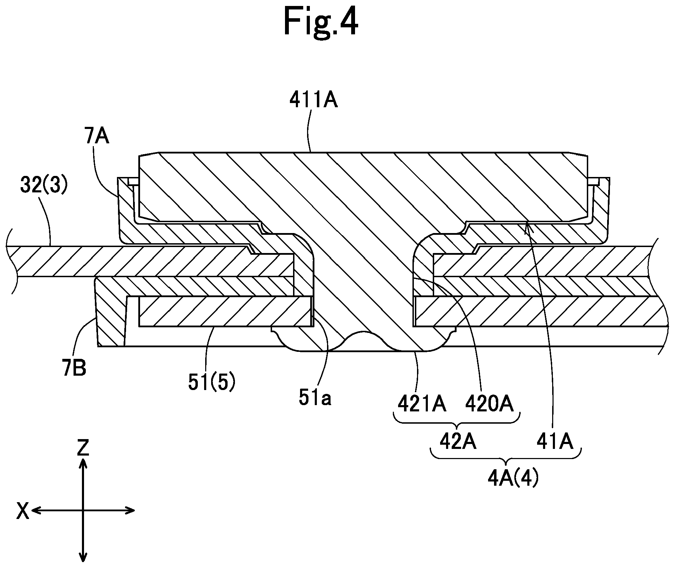

As shown also in Fig. 4, the positive electrode terminal 4A includes a positive electrode flange 41A extending along an outer surface of the case 3, and a positive electrode shaft 42A extending from the positive electrode flange 41A to pass through the case 3 and be conductive with the electrode assembly 2. In the positive electrode terminal 4A, the positive electrode flange 41A and the positive electrode shaft 42A are formed integrally. The positive electrode terminal 4A of this embodiment is made of, for example, aluminum or an aluminum-based metal such as an aluminum alloy.

The positive electrode flange 41A extends along the cover plate 32 of the case 3. Specifically, the positive electrode flange 41A has a rectangular plate shape elongated in the X-axis direction. The positive electrode flange 41A has a weld surface 411A on the opposite side to the case 3. The weld surface 411Ais directed away in the Z-axis direction from the case 3, and is a surface to which a member (i.e., conducting member such as a bus bar) is welded for conducting the positive electrode terminal 4A with an external terminal of another electric storage device, an external device, or the like.

The positive electrode shaft 42A extends in the Z-axis direction to pass through the case 3. That is, the positive electrode shaft 42A passes through the case 3 (cover plate 32) in the Z-axis direction. Specifically, the positive electrode shaft 42A has a positive electrode shaft body 420A extending in the Z-axis direction, and a positive electrode diameter expansion part 421A extending from the positive electrode shaft body 420A as viewed from the Z-axis direction.

The positive electrode shaft body 420A is a columnar portion extending in the Z-axis direction, and passes through the case 3 (specifically, the cover plate 32). The positive electrode shaft body 420A of this embodiment has a cylindrical shape, and passes through the insulating member 7A, the cover plate 32, the insulating member 7B, and a corresponding one of the current collectors 5.

The positive electrode diameter expansion part 421A is configured to allow the case 3 and the current collector 5 to be sandwiched in the X-axis direction between the positive electrode diameter expansion part 421A and the positive electrode flange 41A. The positive electrode diameter expansion part 421A of this embodiment is configured allow the insulating member 7A, the cover plate 32, the insulating member 7B, and the current collector 5 to be sandwiched between the positive electrode diameter expansion part 421A and the positive electrode flange 41A. The positive electrode diameter expansion part 421A extends (i.e., has an expanded diameter) along the current collector 5 inside the case 3.

As shown in Fig. 1, Fig. 2, and Fig. 5 to Fig. 7, the negative electrode terminal 4B includes a negative electrode flange (flange) 41B extending along the outer surface of the case 3, and a negative electrode shaft (shaft) 42B extending from the negative electrode flange 41B to pass through the case 3 and be conductive with the electrode assembly 2. In the negative electrode terminal 4B, the negative electrode flange 41B and the negative electrode shaft 42B are formed separately from each other (formed of separate members). The negative electrode flange 41B and the negative electrode shaft 42B are connected to each other with the negative electrode shaft 42B being swaged.

The negative electrode flange 41B extends along the cover plate 32 of the case 3. Specifically, the negative electrode flange 41B has a rectangular plate shape elongated in the X-axis direction. The negative electrode flange 41B has a through hole 412B through which the negative electrode shaft 42B is inserted. The through hole 412B passes through the negative electrode flange 41B in the Z-axis direction (in other words, thickness direction of the negative electrode flange 41B). The through hole 412B of this embodiment has a circular shape, and is disposed in the central part of the negative electrode flange 41B.

The negative electrode flange 41B has a weld surface 411B on the opposite side to the case 3. Similarly to the weld surface 411A of the positive electrode terminal 4A, the weld surface 411B is directed away in the Z-axis direction from the case 3, and is a surface to which a conductive member such as a bus bar is welded.

The negative electrode flange 41B is made of a clad material having a plurality of (two in the example of this embodiment) metal layers 411 layered in the Z-axis direction. In the plurality of metal layers 411, metal layers 411 adjacent to each other are made of different metals in kind.

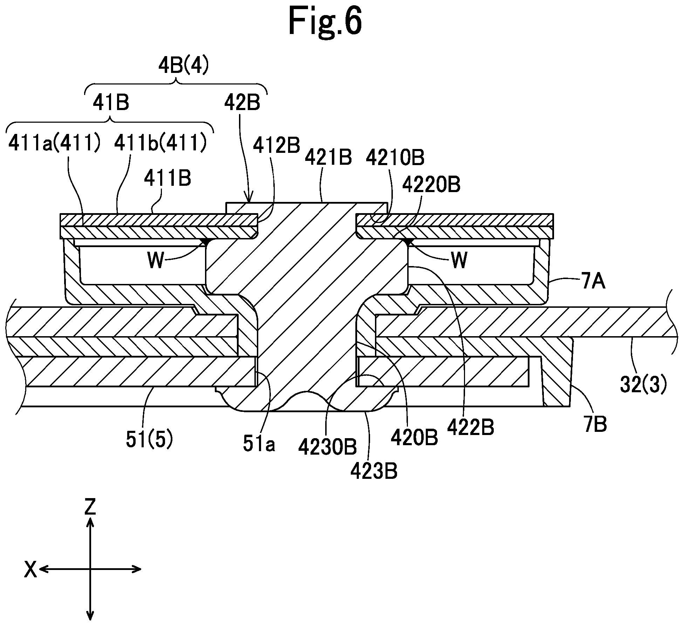

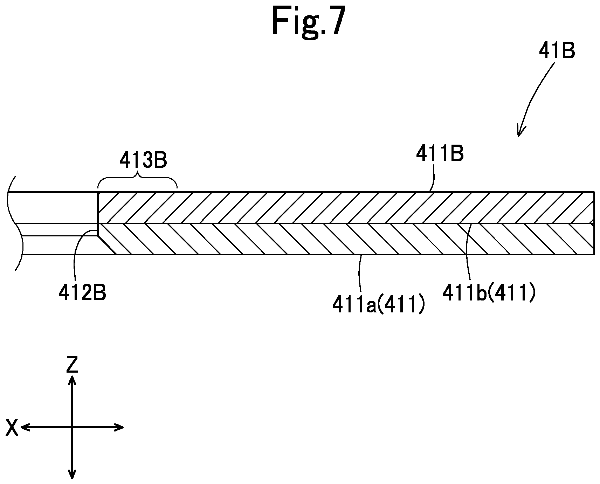

In the negative electrode flange 41B, a metal layer (first metal layer) 411a at one end (i.e., lower end in Fig. 6 and Fig. 7) in the Z-axis direction of the plurality of metal layers 411 is made of the same metal in kind as the metal of the negative electrode shaft 42B. The first metal layer 411a is welded to the negative electrode shaft 42B (see reference sign W (weld zone) in Fig. 6). In the negative electrode flange 41B, a metal layer (second metal layer) 411b at the other end (i.e., upper end in Fig. 6 and Fig. 7) in the Z-axis direction of the plurality of metal layers 411 is made of a different metal in kind from the metal of the negative electrode shaft 42B.

The negative electrode flange 41B of this embodiment has two metal layers, namely the first metal layer 411a and the second metal layer 411b. For example, the first metal layer 411a is made of copper or a copper-based metal such as a copper alloy, the second metal layer 411b is made of aluminum or an aluminum-based metal such as an aluminum alloy. Specifically, the first metal layer 411a of the negative electrode flange 41B of this embodiment is made of pure copper, and the second metal layer 411b is made of an aluminum alloy. The negative electrode flange 41B has a rectangular shape having a dimension in the X-axis direction of 19 mm or more and 21 mm or less and a dimension in the Y-axis direction of 8 mm or more and 8.5 mm or less. The negative electrode flange 41B of this embodiment has a rectangular shape having a dimension in the X-axis direction of 20 mm and a dimension in the Y-axis direction of 8.3 mm. The thickness of the negative electrode flange 41B (dimension in the Z-axis direction) is 0.9 mm or more and 1.1 mm or less.

The first metal layer 411a is located close to the case 3 relative to the second metal layer 411b in the negative electrode flange 41B. The first metal layer 411a extends along a direction of an X-Y plane (i.e., plane including the X-axis direction and the Y-axis direction), and has a dimension in the Z-axis direction (i.e., thickness) that is constant throughout positions in the direction of the X-Y plane except the through hole 412B. The thickness of the first metal layer 411a of this embodiment is 0.4 mm or more and 0.6 mm or less.

The second metal layer 411b is located far from the case 3 relative to the first metal layer 411a in the negative electrode flange 41B. The second metal layer 411b extends along the direction of the X-Y plane (i.e., plane including the X-axis direction and the Y-axis direction), and has a dimension in the Z-axis direction (i.e., thickness) that is constant throughout positions in the direction of the X-Y plane except the through hole 412B. The thickness of the second metal layer 411b of this embodiment is substantially the same as the thickness of the first metal layer 411a. The weld surface 411B of the negative electrode flange 41B is formed of a surface of the second metal layer 411b directed away from the case 3.

The negative electrode shaft 42B extends in the Z-axis direction to pass through the case 3. That is, the negative electrode shaft 42B passes through the case 3 (cover plate 32) in the Z-axis direction. Specifically, the negative electrode shaft 42B has a negative electrode shaft body 420B extending in the Z-axis direction, and a plurality of diameter expansion parts (i.e., first diameter expansion part 421B, second diameter expansion part 422B, and third diameter expansion part 423B) each extending from the negative electrode shaft body 420B as viewed from the Z-axis direction (see Fig. 6). The negative electrode shaft body 420B and the plurality of diameter expansion parts 421B, 422B, 423B are formed integrally. The negative electrode shaft 42B is made of, for example, copper or a copper-based metal such as a copper alloy, and the negative electrode shaft 42B of this embodiment is made of pure copper.

The negative electrode shaft body 420B is a columnar portion extending in the Z-axis direction, and passes through the case 3 (specifically, the cover plate 32). The negative electrode shaft body 420B of this embodiment has a cylindrical shape, and passes through the insulating member 7A, the cover plate 32, the insulating member 7B, and a corresponding one of the current collectors 5. The negative electrode shaft body 420B has a diameter of 3.5 mm or more and 4.5 mm or less. The diameter of the negative electrode shaft body 420B of this embodiment is 4 mm.

The first diameter expansion part 421B extends (i.e., has an expanded diameter) along the second metal layer 411b of the negative electrode flange 41B. The first diameter expansion part 421B has a surface including a first conductive surface (conductive surface) 4210B that is directed toward the case 3 and is in contact with (conductive with) the second metal layer 411b (see Fig. 6). The first diameter expansion part 421B of this embodiment extends along a circumferential edge part of the through hole 412B in the second metal layer 411b from the other end (i.e., upper end in Fig. 6) in the Z-axis direction of the negative electrode shaft body 420B, and has a profile having a circular shape concentric with the negative electrode shaft body 420B as viewed from the Z-axis direction. Specifically, the first diameter expansion part 421B has a diameter of 5.5 mm or more and 7.5 mm or less, and has a thickness (dimension in the Z-axis direction) of 0.5 mm or more and 1.5 mm or less. The diameter of the first diameter expansion part 421B of this embodiment is 6.55 mm, and the thickness thereof is 1 mm. The area of the first conductive surface 4210B, that is, the contact area between the negative electrode flange 41B and the first diameter expansion part 421B of the negative electrode shaft 42B is 46 mm² or more and 75 mm² or less.

The second diameter expansion part 422B is configured to allow a circumferential edge part of the through hole 412B in the negative electrode flange 41B (i.e., through hole circumferential edge part 413B; see Fig. 7) to be sandwiched between the second diameter expansion part 422B and the first diameter expansion part 421B in the Z-axis direction. The second diameter expansion part 422B extends (i.e., has an expanded diameter) along the first metal layer 411a of the negative electrode flange 41B. Specifically, the second diameter expansion part 422B extends along the circumferential edge part of the through hole 412B in the first metal layer 411a. The second diameter expansion part 422B has a surface including a second conductive surface (conductive surface) 4220B that is directed away from the case 3 and is in contact with (conductive with) the first metal layer 411a (see Fig. 6). The second diameter expansion part 422B of this embodiment extends from an intermediate position in the Z-axis direction of the negative electrode shaft body 420B, and has a profile having a circular shape concentric with the negative electrode shaft body 420B as viewed from the Z-axis direction. Specifically, the second diameter expansion part 422B has a diameter of 8 mm or more and 8.55 mm or less, and has a thickness (dimension in the Z-axis direction) of 2 mm or more and 2.5 mm or less. The diameter of the second diameter expansion part 422B of this embodiment is 8.2 mm, and the thickness thereof is 2.25 mm. The contact area between the second conductive surface 4220B and the negative electrode flange 41B is 29 mm² or more and 44 mm² or less.

The third diameter expansion part 423B is configured to allow the case 3 and the current collectors 5 to be sandwiched between the third diameter expansion part 423B and the second diameter expansion part 422B in the Z-axis direction. The third diameter expansion part 423B of this embodiment is configured to allow the insulating member 7A, the cover plate 32, the insulating member 7B, and the current collector 5 to be sandwiched between the third diameter expansion part 423B and the second diameter expansion part 422B. Specifically, the third diameter expansion part 423B extends (i.e., expands its diameter) along the current collector 5 inside the case 3. The third diameter expansion part 423B has a surface including a third conductive surface 4230B that is directed toward the case 3 in the Z-axis direction and is in contact with (conductive with) the current collector 5 (see Fig. 6). The third diameter expansion part 423B of this embodiment extends from one end (i.e., lower end in Fig. 6) in the Z-axis direction of the negative electrode shaft body 420B, and has a profile having a circular shape concentric with the negative electrode shaft body 420B as viewed from the Z-axis direction.

The first diameter expansion part 421B and the third diameter expansion part 423B as described above are formed when the negative electrode flange 41B is mounted to the negative electrode shaft 42B or when the negative electrode shaft 42B (or the negative electrode terminal 4B) is mounted to the case 3. A specific description will be given below.

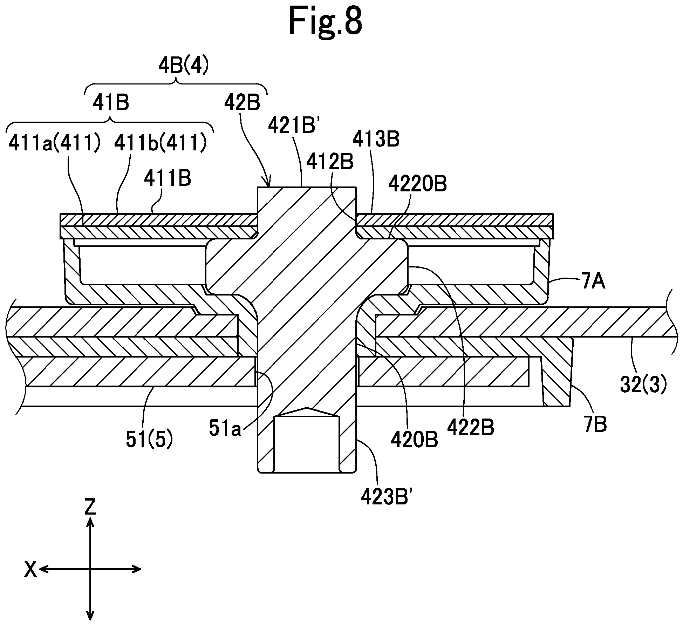

As shown in Fig. 2 and Fig. 8, a portion of the negative electrode shaft 42B corresponding to the first diameter expansion part 421B before the negative electrode flange 41B is mounted (fixed) is a columnar portion (first diameter expansion part corresponding portion) 421B' capable of being inserted through the through hole 412B of the negative electrode flange 41B. The first diameter expansion part corresponding portion 421B' is swaged in the state of being inserted through the through hole 412B of the negative electrode flange part 41B and in the state where the through hole circumferential edge part 413B of the negative electrode flange 41B is in contact with the second diameter expansion part (i.e., portion having a lager diameter than that of the through hole 412B) 422B (see Fig. 8). The first diameter expansion part corresponding portion 421B' thereby extends along the through hole circumferential edge part 413B to consequently form the first diameter expansion part 421B.

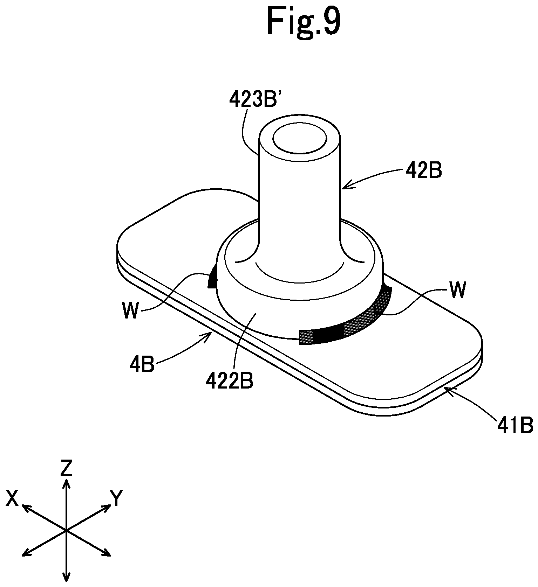

In the negative electrode terminal 4B of this embodiment, the negative electrode shaft 42B is swaged to have the negative electrode flange 41B mounted thereto as described above, and then the negative electrode flange part 41B and the negative electrode shaft 42B are further welded to each other. Specifically, the circumferential edge part of the through hole 412B in the first metal layer 411a of the negative electrode flange 41B (i.e., through hole circumferential edge part 413B) and the second diameter expansion part 422B of the negative electrode shaft 42B are welded to each other (see the weld zones W in Fig. 6 and Fig. 9). In the negative electrode terminal 4B of this embodiment, as shown in Fig. 9, the circumferential edge part of the through hole 412B in the first metal layer 411a and the second diameter expansion part 422B of the negative electrode part 42B are welded to each other at one arc area and the other arc area in the X-axis direction.

Each of the weld zones W on the negative electrode terminal 4B is set to have such a size as to cause no change in resistance of the electric storage device 1 before and after the first diameter expansion part (swaged portion) 421B of the negative electrode shaft 42B is damaged if such damage occurs. That is, each of the weld zones W is set to have such a size as to cause no change in resistance of the electric storage device 1 before and after the first diameter expansion part 421B is for example damaged, even if such damage or the like is caused to the first diameter expansion part 421B to interrupt a part of or the entire conduction path between the first diameter expansion part 421B and the negative electrode flange 41B (specifically, between the first conductive surface 4210B of the first diameter expansion part 421B and the circumferential edge part of the through hole 412B in the first metal layer 411a of the negative electrode flange 41B).

The term "resistance" in the phrase "cause no change in resistance of the electric storage device 1" specifically refers to resistance between the negative electrode flange 41B and the current collector 5 with which the negative electrode terminal 4B is conductive. The "resistance" is determined based on, for example, the resistance between the negative electrode flange 41B and the negative electrode shaft 42B (specifically a central portion of the first diameter expansion part 421B as viewed in the Z-axis direction), and the resistance between the current collector 5 (specifically, a circumferential edge part of a through hole 51a of a first connecting portion 51) and the negative electrode shaft 42B (specifically, a central portion of the third diameter expansion part 423B as viewed in the Z-axis direction). The method for measuring the resistance at this time includes measuring a DC resistance when a direct current of 1 A is applied.

Specifically, the size of each of the weld zones W (welding areas) is set so that the electric resistance of the weld zone W is 0.005 mΩ or less even if the damage or the like of the first diameter expansion part 421B occurs. The welding area of each of the weld zones W in the negative electrode terminal 4B of this embodiment is, for example, 0.3 mm² or more.

Since the circumferential edge part of the through hole 412B in the first metal layer 411a of the negative electrode flange 41B and the second diameter expansion part 422B of the negative electrode shaft 42B are made of the same metal in kind (a copper-based metal in the example of this embodiment), this welding allows the weld zones W to have more sufficient welding strength than in the case where different metals in kind are welded to each other. The negative electrode shaft 42B of the negative electrode terminal 4B shown in Fig. 9 has a shape before being swaged.

As shown in Fig. 2, Fig. 8, and Fig. 9, a portion of the negative electrode shaft 42B corresponding to the third diameter expansion part 423B before being mounted (fixed) to the case 3 is a tubular portion (third diameter expansion part corresponding portion) 423B' capable of being inserted through each of the through holes of the insulating member 7A, the case 3 (cover plate 32 in the example of this embodiment), the insulating member 7B, and the current collector 5, respectively. The third diameter expansion part corresponding portion 423B' is swaged to have an expanded diameter while being inserted through each of the through holes of the insulating member 7A, the case 3, the insulating member 7B, and the current collector 5, respectively (in other words, while passing through each of the members 7A, 3, 7B, and 5; see Fig. 8), so that the third diameter expansion part 423B is formed.

The order in which the first diameter expansion part 421B and the third diameter expansion part 423B are formed is not limited. The forming can take place in the order of the first diameter expansion part 421B and the third diameter expansion part 423B, or in the order of the third diameter expansion part 423B and the first diameter expansion part 421B. The first diameter expansion part 421B and the third diameter expansion part 423B can be formed at the same time.

Returning to Fig. 2, the current collectors 5 are disposed in the case 3 and are conductively connected directly or indirectly to the electrode assembly 2. The current collectors 5 of this embodiment are conductively connected to the electrode assembly 2 via clip members 50. That is, the electric storage device 1 includes the clip members 50 conductively connecting the electrode assembly 2 and the current collectors 5 to each other.

Each of the current collectors 5 is formed of a member having conductivity. Each of the current collectors 5 is disposed along an inner surface of the case 3. Each of the current collectors 5 of this embodiment conductively connects a corresponding one of the external terminals 4 and a corresponding one of the clip members 50 to each other. Specifically, each of the current collectors 5 includes a first connecting portion 51 conductively connected to the external terminal 4, a second connecting portion 52 conductively connected to the electrode assembly 2, and a bent portion 53 connecting the first connecting portion 51 and the second connecting portion 52 to each other. In each of the current collectors 5, the bent portion 53 is disposed near a boundary between the cover plate 32 and a corresponding one of the short walls 314 within the case 3, the first connecting portion 51 extends from the bent portion 53 along the cover plate 32, and the second connecting portion 52 extends from the bent portion 53 along the corresponding one of the short walls 314. The first connecting portion 51 has a through hole 51a, and is conductive with the diameter expansion part (the positive electrode diameter expansion part 421A or the third diameter expansion part 423B) in the state where the shaft of the external terminal 4 (the positive electrode shaft 42A or the negative electrode shaft 42B) is inserted through the through hole 51a (see Fig. 4 and Fig. 6). The second connecting portion 52 of this embodiment is, for example, joined to the clip member 50 by ultrasonic welding.

The current collectors 5 configured as above are respectively disposed on the positive electrode and the negative electrode of the electric storage device 1. In the electric storage device 1 of this embodiment, the current collectors 5 are respectively disposed on the non-covered layered part 26 of the positive electrode and the non-covered layered part 26 of the negative electrode, of the electrode assembly 2 within the case 3. The current collector 5 of the positive electrode and the current collector 5 of the negative electrode are made of different materials. Specifically, the current collector 5 of the positive electrode is made of, for example, aluminum or an aluminum-based metal such as an aluminum alloy while the current collector 5 of the negative electrode is made of, for example, copper or a copper-based metal such as a copper alloy.

Each of the clip members 50 pinches and bundles the positive electrode 23 or the negative electrode 24, which is layered in the non-covered layered part 26 of the electrode assembly 2. With this configuration, the clip member 50 allows the positive electrode 23 or the negative electrode 24, which is formed to be layered in the non-covered layered part 26, to be made reliably conductive. Each of the clip members 50 of this embodiment is formed of a plate-shaped metal material that is bent so as to have a U-shape in cross section.

The insulating member 6 is disposed between the case 3 (specifically the case body 31) and the electrode assembly 2. The insulating member 6 is formed of a sheet-shaped member having insulating properties that is cut into a specific shape and bent into a bag shape.

In the electric storage device 1 as described above, the negative electrode flange 41B is made of the clad material to allow the same metal in kind as the metal of the negative electrode shaft 42B to be disposed at the portion of the negative electrode flange 41B to which the negative electrode shaft 42B is welded. This configuration ensures sufficient welding strength between the negative electrode shaft 42B and the negative electrode flange 41B even when the negative electrode flange 41B has a different metal in kind from the metal of the negative electrode shaft 42B.

In the electric storage device 1 of this embodiment, the area of each of the weld zones W is 0.3 mm² or more; thus, change in resistance between the negative electrode flange 41B and the negative electrode shaft 42B is suppressed even when the conduction path between the first diameter expansion part 421B and the second metal layer 411b of the negative electrode flange 41B is damaged. That is, the size of the weld zone W (welding area in the example of this embodiment) is set so that no change in resistance occurs in the electric storage device 1 before and after the first diameter expansion part (swaged portion) 421B of the negative electrode terminal 4B is for example damaged to thereby break (interrupt) the conduction path between the first diameter expansion part 421B and the negative electrode shaft 42B, even if such damage or the like occurs. Thus, the electric resistance value in the electric storage device 1 hardly increases (i.e., the electric storage device 1 can secure its reliability in electric conduction) even when the electric storage device 1 when in use is, for example, placed under a severe environment for a long period of time.

In the electric storage device 1 of this embodiment, the negative electrode flange 41B and the negative electrode shaft 42B are connected to each other with the negative electrode shaft 42B being swaged, the contact area between the negative electrode flange 41B and the first diameter expansion part 421B of the negative electrode shaft 42B is 46 mm² or more and 75 mm² or less, the thickness of the negative electrode flange 41B is 0.9 mm or more and 1.1 mm or less, and the thickness of the first metal layer 411a to which the negative electrode shaft 42B is welded is 0.4 mm or more and 0.6 mm or less. Thus, connecting strength and conduction performance between the negative electrode flange 41B and the negative electrode shaft 42B by swaging and welding can be sufficiently secured. That is, connecting strength and conduction performance between the negative electrode flange 41B and the negative electrode shaft 42B are secured so that the electric storage device 1 can sufficiently withstand its use under the condition in which it is generally used.

It is a matter of course that the electric storage device of the present invention is not limited to the aforementioned embodiment, but various modifications can be made without departing from the gist of the present invention. For example, a configuration of an embodiment can be added to a configuration of another embodiment, and part of a configuration of an embodiment can be replaced by a configuration of another embodiment. Further, part of a configuration of an embodiment can be deleted.

The electric storage device 1 of the aforementioned embodiment has been described by taking, for example, the case where only the negative electrode terminal 4B has the flange (negative electrode flange 41B) and the shaft (negative electrode shaft 42B) formed of different members, without limitation thereto. The configuration can be such that the positive electrode terminal 4A also has the flange (positive electrode flange 41A) and the shaft (positive electrode shaft 42A) formed of different members.

The aforementioned embodiment has been described by taking, for example, the case where the first metal layer 411a of the negative electrode flange 41B and the negative electrode shaft 42B are made of pure copper and the second metal layer 411b of the negative electrode flange 411B is made of an aluminum alloy, without limitation thereto. The first metal layer 411a and the negative electrode shaft 42B can be made of the same metal (material).

The aforementioned embodiment has been described by taking, for example, the case where the negative electrode flange 41B is made of a clad material having the two metal layers 411 (specifically the first metal layer 411a and the second metal layer 411b), without limitation thereto. The configuration can be such that the negative electrode flange 41B is made of a clad material having three or more metal layers 411. In this case, the clad material can include a plurality of metal layers 411 made of the same metal in kind as long as each adjacent metal layers 411 are made of different metals in kind. Even these configurations can still ensure sufficient welding strength in the weld zone W between the negative electrode flange 41B and the negative electrode shaft 42B as long as the metal of the metal layer 411 of a surface layer (on the side of the weld zone W) of the negative electrode flange 41B is the same as the metal of the negative electrode shaft 42B. Moreover, the negative electrode flange 41B can have sufficient strength if a metal layer 411 different from the metal layer 411 for being welded is made of a metal (a copper-based metal in the example of the aforementioned embodiment) harder than the metal of the surface layer (an aluminum-based metal in the example of the aforementioned embodiment).

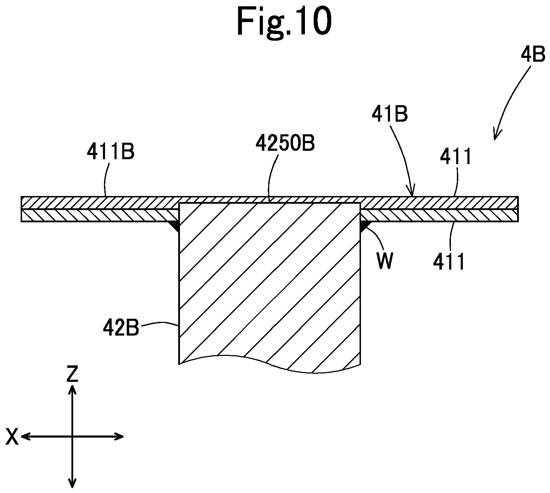

The negative electrode terminal 4B of the aforementioned embodiment has been described by taking, for example, the case where the negative electrode shaft 42B passes through the negative electrode flange 41B, without limitation thereto. The configuration can be such that the negative electrode terminal 4B has the negative electrode shaft 42B not passing through the negative electrode flange 41B (see Fig. 10).

The negative electrode terminal 4B of the aforementioned embodiment has been described by taking, for example, the case where the negative electrode shaft 42B has a pair of diameter expansion parts (first diameter expansion part 421B and second diameter expansion part 422B) at their positions connected to the negative electrode flange 41B, and the pair of diameter expansion parts 421B and 422B have the through hole circumferential edge part 413B of the negative electrode flange 41B sandwiched therebetween, without limitation thereto. The configuration can be such that the negative electrode shaft 42B has no diameter expansion part at the position connected to the negative electrode flange 41B (see, for example, Fig. 10). No specific configuration of the connecting portion between the negative electrode shaft 42B and the negative electrode flange 41B is limited as long as the configuration is such that the negative electrode shaft 42B and the negative electrode flange 41B are conductive with each other (that is, the negative electrode shaft 42B includes a conductive surface 4250B conductive with the negative electrode flange 41B).

The aforementioned embodiment has been described by taking, for example, the case where the electric storage device is used as a rechargeable nonaqueous electrolyte secondary cell (e.g., lithium-ion secondary battery cell), but the electric storage device can have an arbitrary type and size (capacity). In the aforementioned embodiment, a description has been given on a lithium-ion secondary battery cell as an example of the electric storage device, without limitation thereto. For example, the present invention is applicable also to various secondary battery cells as well as primary battery cells and electric storage devices for capacitors such as electric double layer capacitors.

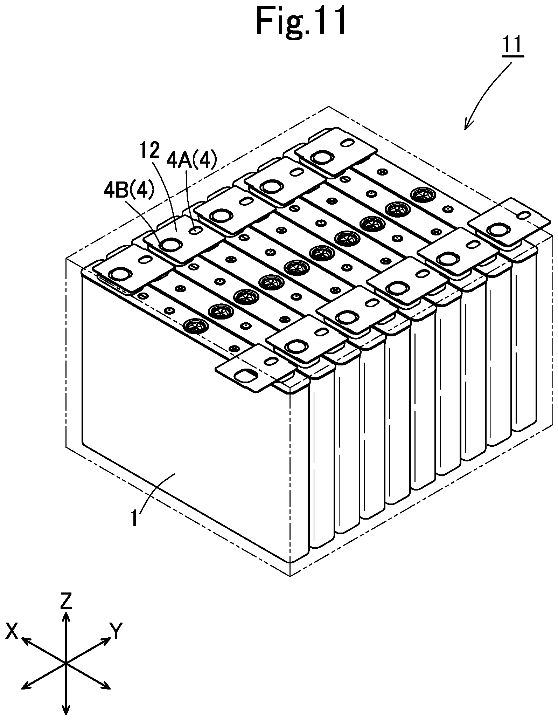

The electric storage device (e.g., battery cell) 1 can be used for an electric storage apparatus (or cell module in the case where the electric storage device is a cell) 11 as shown in Fig. 11. The electric storage apparatus 11 includes at least two electric storage devices 1, and a bus bar member 12 configured to electrically connect the two (different) electric storage devices 1 to each other. In this case, the technique of the present invention can be applied to at least one of the electric storage devices 1.

The present invention has been appropriately and sufficiently described as above through embodiments with reference to the drawings in order to express the present invention, but it shall be recognized that those skilled in the art could easily modify and/or improve the aforementioned embodiments. Therefore, it shall be construed that any modified embodiment or improved embodiment by those skilled in the art is covered by the scope of the claims unless they depart from scope of the claims.

### REFERENCE SIGNS LIST

1: Electric storage device
2: Electrode assembly
21: Winding core
22: Layered body
23: Positive electrode
231: Metal foil
232: Positive electrode active material layer
24: Negative electrode
241: Metal foil
242: Negative electrode active material layer
25: Separator
26: Non-covered layered part
3: Case
31: Case body
311: Closed part
312: Body part
313: Long wall
314: Short wall
32: Cover plate
34: Opening peripheral edge
4: External terminal
4A: Positive electrode terminal (external terminal)
41A: Positive electrode flange
411A: Weld surface
42A: Positive electrode shaft
420A: Positive electrode shaft body
421A: Positive electrode diameter expansion part
4B: Negative electrode terminal (external terminal)
41B: Negative electrode flange (flange)
411B: Weld surface
412B: Through hole
413B: Through hole circumferential edge part
411: Metal layer
411a: First metal layer
411b: Second metal layer
42B: Negative electrode shaft (shaft)
420B: Negative electrode shaft body
421B: First diameter expansion part
421B': First diameter expansion part corresponding portion
4210B: First conductive surface
422B: Second diameter expansion part
4220B: Second conductive surface
423B: Third diameter expansion part
423B': Third diameter expansion part corresponding portion
4230B: Third conductive surface
4250B: Conductive surface
5: Current collector
50: Clip member
51: First connecting portion
51a: Through hole
52: Second connecting portion
53: Bent portion
6: Insulating member
7A, 7B: Insulating member
11: Electric storage apparatus
12: Bus bar member
100: External terminal
101: Shaft
102: Flange
C: Winding center axis
W: Weld zone

## Claims

1. An electric storage device comprising:
an electrode assembly;
a case for housing the electrode assembly; and
an external terminal made of a metal and disposed on the case, wherein
the external terminal comprises:
a flange extending along an outer surface of the case; and
a shaft extending from the flange to pass through the case and be conductive with the electrode assembly,
the flange is made of a clad material having a plurality of metal layers layered in a passing direction of the shaft,
each adjacent ones of the plurality of metal layers are made of different metals in kind, and
one of the plurality of metal layers of the flange at one end in the passing direction is made of the same metal in kind as the metal of the shaft, and is welded to the shaft.

2. The electric storage device according to claim 1, wherein
the flange and the shaft are connected to each other with the shaft being swaged, and
a weld zone between the one of the plurality of metal layers at the one end and the shaft is set to have a such a size as to cause no change in resistance of the electric storage device before and after the swaged portion of the shaft is damaged if such damage occurs.

3. The electric storage device according to claim 1, wherein
the flange and the shaft are connected to each other with the shaft being swaged,
a contact area between the flange and the swaged portion of the shaft is 46 mm² or more and 75 mm² or less,
the flange has a dimension in the passing direction that is 0.9 mm or more and 1.1 mm or less, and
the one of the plurality of metal layers welded to the shaft has a dimension in the passing direction that is 0.4 mm or more and 0.6 mm or less.
